(19) Europäisches Patentamt
European Patent Office
Office européen des brevets

(11) **EP 3 478 981 B1**

(12) **EUROPÄISCHE PATENTSCHRIFT**

(45) Veröffentlichungstag und Bekanntmachung des Hinweises auf die Patenterteilung:
**11.03.2020 Patentblatt 2020/11**

(21) Anmeldenummer: **17725965.2**

(22) Anmeldetag: **29.05.2017**

(51) Int Cl.:
**F16D 48/08** *(2006.01)*

(86) Internationale Anmeldenummer:
**PCT/EP2017/062824**

(87) Internationale Veröffentlichungsnummer:
**WO 2018/001656 (04.01.2018 Gazette 2018/01)**

(54) **VERFAHREN ZUR ÜBERTRAGUNG UND DÄMPFUNG VON DREHMOMENTEN**

METHOD FOR TRANSMITTING AND DAMPING TORQUES

PROCÉDÉ POUR TRANSMETTRE ET AMORTIR DES COUPLES DE ROTATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2016 DE 102016211950**

(43) Veröffentlichungstag der Anmeldung:
**08.05.2019 Patentblatt 2019/19**

(73) Patentinhaber: **ZF Friedrichshafen AG**
**88046 Friedrichshafen (DE)**

(72) Erfinder:
- **HÖCHE, Tobias**
  **97461 Hofheim i. UFr. (DE)**
- **DIECKHOFF, Tobias**
  **97078 Würzburg (DE)**
- **LORENZ, Daniel**
  **97688 Bad Kissingen (DE)**
- **ORLAMÜNDER, Andreas**
  **97453 Schonungen (DE)**
- **HOFFELNER, Ingrid**
  **97478 Knetzgau (DE)**
- **GROSSPIETSCH, Wolfgang**
  **97422 Schweinfurt (DE)**
- **MATSCHAS, Steffen**
  **97708 Bad Bocklet-Aschach (DE)**
- **FRIESS, Johannes**
  **97513 Michelau im Steigerwald (DE)**
- **EBERT, Christofer**
  **97840 Hafenlohr (DE)**
- **KRAM, Matthias**
  **97080 Würzburg (DE)**
- **EGLER, Dennis**
  **34314 Espenau (DE)**
- **ROHM, Axel**
  **97453 Schonungen (DE)**
- **WACK, Erwin**
  **97464 Niederwerrn (DE)**
- **UNSELD, Bernd**
  **88213 Ravensburg (DE)**
- **DÖGEL, Thomas**
  **97720 Nüdlingen (DE)**
- **REISCH, Matthias**
  **88214 Ravensburg (DE)**
- **SPATH, Lukas**
  **97453 Schonungen (DE)**
- **EBERT, Angelika**
  **97453 Schonungen (DE)**

(56) Entgegenhaltungen:
**DE-A1- 19 612 455      DE-A1- 19 823 766**
**DE-A1-102008 009 135      DE-A1-102013 204 698**

**Beschreibung**

Vorliegende Erfindung betrifft ein Verfahren zur Übertragung und zur Dämpfung eines mittleren Drehmomentes mit einem überlagerten Wechselmoment in einer Drehmomentübertragungsanordnung für den Antriebstrang eines Kraftfahrzeugs mit einem Eingangsbereich, und einem nachfolgendem Ausgangsbereich.

Aus dem Stand der Technik der DE 10 2008 009 135 A1 ist ein solches Verfahren bei einer Drehmomentübertragungsanordnung für den Antriebstrang eines Kraftfahrzeuges bekannt, bei dem zwischen einem Verbrennungsmotor und einem Wechselgetriebe eine Reibungskupplung vorgesehen ist, und wobei die Reibungskupplung so angesteuert wird, dass eine an der Reibungskupplung anliegende Drehzahldifferenz einer Resonanzdrehzahlbreite beim Anfahren verringert wird, im Vergleich ohne Ansteuerung.

Nachteilig an diesem Verfahren aus dem Stand der Technik, dass mit diesem Verfahren nur der Anfahrvorgang und das durch den Anfahrvorgang bekannte Rupfen verringert werden soll. Dieses Verfahren besitzt jedoch nicht die Leistungsfähigkeit, Drehschwingungen, die durch den Verbrennungsmotor verursacht werden, zu dämpfen, die bei einem permanenten Fahrzustand auftreten.

Aufgabe vorliegender Erfindung ist es deshalb, ein Verfahren zur Drehschwingungsreduzierung einer Drehmomentübertragungsvorrichtung bereitzustellen, die vor allem nach dem Anfahrvorgang eine vorteilhafte, Drehschwingungsreduzierung bewirkt.

Diese Aufgabe wird durch die Merkmale des unabhängigen Patentanspruches 1 gelöst.

Dabei handelt es sich um ein Verfahren zur Übertragung und zur Dämpfung eines mittleren Drehmomentes mit einem überlagerten Wechselmoment , in einer Drehmomentübertragungsanordnung für einen Antriebsstrang eines Kraftfahrzeugs, umfassend einen um eine Drehachse (A) drehbaren Eingangsbereich und einen um eine Drehachse (B) drehbaren Ausgangsbereich, wobei das mittlere Drehmoment mit dem überlagerten Wechselmoment entlang eines Drehmomentweges von dem Eingangsbereich zu dem Ausgangsbereich übertragen wird, wobei der Eingangsbereich der Drehmomentübertragungsanordnung mit einer Eingangsdrehzahl um die Drehachse (A) und der Ausgangsbereich der Drehmomentübertragungsanordnung mit einer Ausgangsdrehzahl um die Drehachse (B) rotiert, wobei sich zumindest die Eingangsdrehzahl aus einer mittleren Drehzahl und einem überlagerten Wechselanteil zusammensetzt, wobei der Wechselanteil näherungsweise durch eine Überlagerung periodischer Drehzahlschwingungen beschrieben werden kann, deren Frequenzen im Wesentlichen in einem ganzzahligen Verhältnis zur Zündfrequenz stehen, wobei jede dieser periodischen Schwingungen ein Minimum und ein Maximum aufweist, wobei eine Schlupfanordnung im Drehmomentweg zwischen dem Eingangsbereich und dem Ausgangsbereich zur Übertragung des mittleren Drehmomentes mit dem überlagerten Wechselmoment und zur Erzeugung eines Drehzahlschlupfes zwischen der Drehzahl ne und der Drehzahl na im Drehmomentweg vorgesehen ist, wobei die Schlupfanordnung im Bereich der Maxima zumindest eines periodischen Schwingungsanteils des Wechselanteils ein Maximum einer ex-ternen Aktivierung des Drehzahlschlupfes und im Bereich der Minima zumindest eines periodischen Schwingungsanteils des Wechselanteils ein Minimum einer externen Aktivierung des Drehzahlschlupfes vorsieht. Dabei kann zwischen dem Eingangsbereich und dem Ausgangsbereich und vor der Schlupfanordnung noch weitere Drehschwingungsdämpfungseinheiten wie beispielsweise ein erster und/oder ein zweiter Federsatz sowie eine Tilgereinheit vorgeschalten werden. Dies ist besonders vorteilhaft, da die Wechselmomente, die von dem Eingangsbereich beispielsweise einen Verbrennungsmotor kommen, vorgefiltert werden. Die Schlupfanordnung zielt dabei darauf ab, die verbleibenden restlichen Wechselmomente zu reduzieren, im optimalen Falle sogar auf "Null" zu setzen. Um dies zu erreichen sieht das erfindungsgemäße Verfahren vor, dass für den Fall, dass im Bereich eines Maximums einer periodischen Schwingung des überlagerten Wechselmoments eine maximale externe Aktivierung der Schlupfanordnung erfolgt, mehr Schlupf zuzulassen, und im Bereich eines Minimums einer periodischen Schwingung des überlagerten Wechselmoments eine minimale externe Aktivierung der Schlupfanordnung erfolgt, weniger Schlupf zuzulassen. Dies bedeutet, dass die Schlupfanordnung, die beispielsweise von einer Schlupfkupplung, beispielsweise einer Lamellenkupplung, gebildet werden kann von der externen Aktivierung ein hydraulisches Signal erhält in der Form eines niedrigeren hydraulischen Drucks, was eine Verringerung einer Anpresskraft auf die Lamellenkupplung zur Folge haben kann und sich somit eine Schlupferhöhung sprich eine Vergrößerung der Drehzahldifferenz ergibt. Für den Fall der Schlupfreduzierung soll die externe Aktivierung ein hydraulisches Signal zu der Schlupfkupplung in der Form geben, dass hier ein hydraulischer Druck erhöht wird und somit die Anpresskraft auf die Schlupfkupplung ebenfalls erhöht wird, was zu einer Schlupfreduzierung in der Schlupfkupplung zur Folge hat. Hierdurch kann dem Maximum im überlagerten Wechselmoment entgegengewirkt werden. Die externe Aktivierung zur Erzielung der Schlupfreduzierung bzw. der Schlupferhöhung kann auch als Schlupfmodulation bezeichnet werden. Dabei ist die Frequenz der Schlupfmodulation abhängig von der Verwendung des Antriebsaggregates beispielsweise des Verbrennungsmotors. Bei der Verwendung einer Viertakt-Verbrennungsmotors ist ein Frequenzbereich von 23 Hertz bis 60 Hertz, bei der Verwendung eines Vierzylinder-Taktmotors die Verwendung eines Frequenzbereiches von circa 33 bis 66 Hertz, und bei der Verwendung eines Sechszylinder-Viertakt-Verbrennungsmotors die Verwendung eines Frequenzbereiches von 50 bis 100 Hertz vorteilhaft.

Eine weitere vorteilhafte Ausführungsform sieht vor, die externe Aktivierung der Schlupfanordnung von einem hydraulischen Aggregat erfolgt. Hierbei kann beispielsweise für den Fall, dass die Schlupfanordnung als eine Reibscheibenkupplung ausgeführt ist, das hydraulische Ausrücksystem hierfür genutzt werden, was kostengünstig ist.

Auch kann das hydraulische Aggregat zumindest eine hydraulische Pumpe und einen aktiven Pulsator vorsehen.

Dabei ist der aktive Pulsator örtlich dem Hochdruckspeicher zugeordnet ist.

Auch kann es vorteilhaft sein, wenn der aktive Pulsator örtlich der Schlupfanordnung zugeordnet ist.

Es kann weiter vorteilhaft sein, wenn die externe Aktivierung geeignet ist, an der Schlupfanordnung einen Modulationsbereich von 23 bis 50 Hz oder einen Bereich von 33 bis 66 Hz oder einen Bereich von 50 bis 100 Hz vorzusehen

Weiter kann die Schlupfanordnung als ein Anfahrelement verwendet werden.

Auch kann es vorteilhaft sein, wenn zusätzlich zu der Schlupfanordnung ein Anfahrelement vorgesehen ist.

Dabei kann die Schlupfanordnung und/ oder das Anfahrelement als eine Reibkupplung, oder als eine Lamellenkupplung, oder als eine hydrodynamische Kupplung, oder als eine Trennkupplung in Hybridantrieben, oder als eine Doppelkupplung oder eine Triplekupplung ausgeführt, oder als eine Bremse in Verbindung mit einem Planetengetriebe ausgeführt sein.

Weiter kann es vorteilhaft vorgesehen sein, dass der aktive Pulsator elektromagnetisch oder piezoelektrisch betrieben ist, oder als eine Pulsationspumpe ausgeführt ist. Weiter kann die Drehachse (A) und die Drehachse (B) koaxial verlaufen oder versetzt zueinander. Besonders bei Fahrzeugen mit Heckantrieb und längs eingebauten Frontmotor liegen die beiden Drehachsen (A) und (B) zueinander koaxial. Bei einem Frontantrieb mit quer eingebautem Motor liegt meist die Drehachse (A) zu der Drehachse (B) versetzt.

Im Folgenden soll die Erfindung anhand von Darstellungen näher erläutert werden. Dabei stellen die in den Zeichnungen dargestellten Ausführungsbeispiele lediglich bevorzugte Ausführungen dar und sollen nicht den Rahmen der Erfindung festlegen. Dieser wird allein durch die anhängigen Ansprüche definiert.

Es zeigen in

Figur 1:    eine schematische Darstellung eines Antriebsstranges als Stand der Technik
Figur 2 :    vorteilhafte schematische Darstellung eines Antriebsstranges
Figur 3:    Diagramm eines umgelenkten Momentenverlaufs
Figur 4:    vorteilhafte schematische Darstellung eines Antriebsstranges
Figur 5:    Vorzugstopologie schematisch
Figur 6:    Prinzipschaltbild einer Schlupfkupplung
Figur 7:    Diagramm eines umgelenkten Momentenverlaufs
Figur 8:    Diagramm Schlupfdrehzahl über Zeit
Figur 9:    Diagramm Reibkoeffizient über Schlupfdrehzahl
Figur 10:    Diagramm Reibkoeffizient über Zeit
Figur 11:    Diagramm Sinusverlauf von Fa
Figur 12:    Diagramm Trapezverlauf von Fa
Figur 13:    Diagramm Sinusverlauf von Fa mit höherer Ordnung
Figur 14:    weitere Diagramme
Figur 15:    Diagramm Eingangsdrehzahl an der Schlupfanordnung in einem Betriebspunkt.
Figur 16:    Diagramm Reibwertverlauf über Schlupf
Figur 17:    Drehmomentübertragungsanordnung für ein automatisiertes Hybridgetriebe mit Leckageventil
Figur 18:    Schematische Darstellung einer erfindungsgemäßen Verfahrensanordnung

Im Folgenden werden gleiche oder funktionell gleichwirkenden Bauteile mit den gleichen Bezugszeichen bezeichnet.

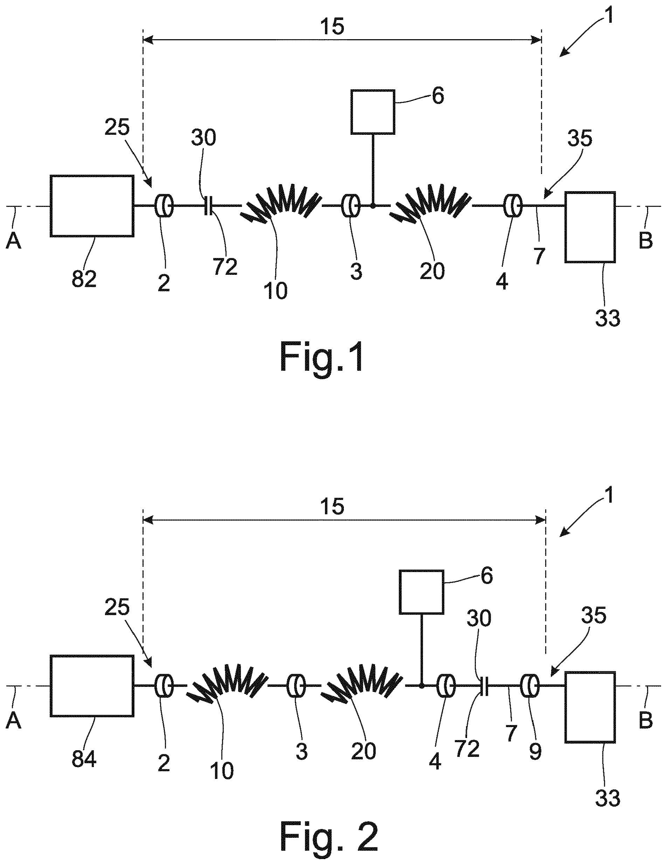

Vorab zu der Figur 1 ist zu erwähnen, dass heutige Drehschwingungsentkopplungssysteme für PKWs neben Feder-Masse-Anordnungen, beispielsweise ZMS, auch drehzahladaptive Tilger vorsehen. Zudem kann und wird, zumindest in Antriebssträngen mit nasslaufendem Anfahrelement, über einen Schlupf im Anfahrelement eine Reduzierung der Drehmomentschwankungen des Verbrennungsmotors durchgeführt. Die hier zum Einsatz kommende Technik, bei der ein Schlupfregler eine vorgegebene mittlere Schlupfdrehzahl einstellt, wird im Folgenden als "aktiver Schlupf Mode 1" bezeichnet. Nachfolgend wird ein Verfahren zur Ansteuerung einer Kupplung in einem PKW-Antriebsstrang vorgestellt, welches als "aktiver Schlupf Mode 2" bezeichnet wird und insbesondere ermöglichen soll, dass bei gleicher mittlerer Schlupfdrehzahl und somit den gleichen Reibungsverlusten eine deutlich bessere Entkopplung zu erreichen ist als bei einer schlupfende Kupplung nach dem Stand der Technik, oder zumindest ein gleichwertiges Entkopplungsniveau wie konventionelle Systeme bei Verwendung leichterer und kostengünstigerer Komponenten für die Vorentkopplung, beispielsweise Federsätze und Tilger.

Die Figur 1 zeigt eine Drehmomentübertragungsanordnung1 in einem automatisiertes Antriebstrang eines Kraftfahrzeuges nach Stand der Technik, welcher eine Drehschwingungsdämpfunsgeinheit 15 mit drehzahladaptivem Tilger 6 enthält. Dabei sind die relevanten Massen, Steifigkeiten und das Anfahrelement, folgendermaßen angeordnet, wobei die Darstellung nur bis einschließlich Getriebe erfolgt. Der Restantriebsstrang ist ausgeblendet. Eine Wandlerüberbrückungskupplung 72 ist am Eingangsbereich 25 der Drehschwingungsdämpfunsgeinheit 15 angeordnet.

Der drehzahladaptivem Tilger 6 ist an einer Zwischenmasse 3 zwischen einem ersten federsatz 10 und einem zweiten Federsatz 20 platziert. Diese Topologie weist folgende Nachteile in Bezug auf die Drehschwingungsentkopplung auf.

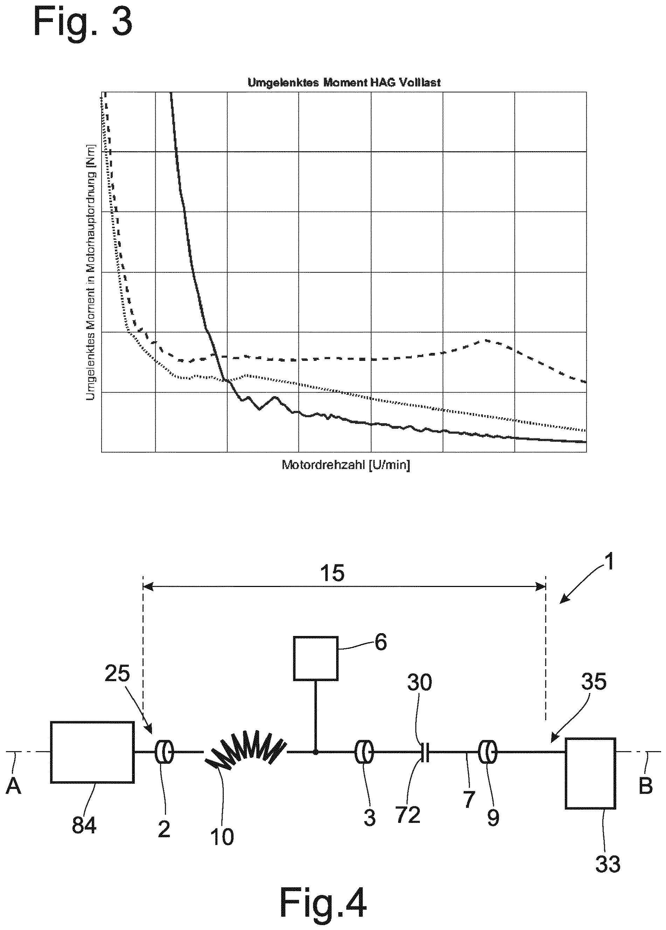

Wird die Wandlerüberbrückungskupplung 72 mit einem Kupplungsschlupf betrieben, verringert dies die Drehmomentschwankungen, welche in die Drehmomentübertragungsanordnungl geleitet werden. Dadurch, dass die Drehzahl der Komponenten auf der Ausgangsseite der Wandlerüberbrückungskupplung 72, und somit auch die des Tilgers 6, um die eingeregelte Schlupfdrehzahl niedriger ist als beispielsweise eine Motordrehzahl des Antriebsaggregates 82, stimmt die Abstimmung des Tilgers 6 auf die Motorordnung nicht mehr, so dass dieser mit zunehmendem Schlupf immer schlechter arbeitet. Die Aufgabe des zweiten Federsatzes 20 ist es, eine Federsteifigkeit zwischen der relativ hohen Massenträgheit des Tilgers6 und dem ebenfalls relativ schweren Getriebe 33 darzustellen. Würde der Tilger 6 direkt auf einer Getriebeeingangswelle 100 angebunden sein, hätte dies bei den üblicherweise vorliegenden Trägheitsmomenten und Wellensteifigkeiten zur Folge, dass sich sogenannte Schwingungsknoten ausbilden. Dies bedeutet, dass bei bestimmten, auch gangabhängigen Drehzahlen, der Tilger im Schwingungssystem keine Anregung erfährt und somit kein Reaktionsmoment aufstellen und folglich nicht zur Drehungleichförmigkeitsentkopplung beitragen kann. Dies äußert sich dann bei der entsprechenden Drehzahl durch eine deutliche Erhöhung der verbleibenden Drehungleichförmigkeit, vergleiche auch in der Figur 3, die gestrichelte Linie im oberen Drehzahlbereich. Mit der bestehenden Topologie wird dies zwar verhindert, allerdings kann sich durch das relativ hohe Massenträgheitsmoment der Zwischenmasse 3 und des Tilgers 6, im Zusammenwirken mit den Steifigkeiten der Federsätze 10 und 20, eine in Bezug auf die Drehungleichförmigkeitsentkopplung ungünstige Zwischenmassen-Resonanz ausbilden.

Die Figur 2 zeigt eine günstigere Topologie der Komponenten, die auch in der Figur 1 gezeigt wurden. Diese zeichnet sich dadurch aus, dass der zweite Federsatz 20 primärseitig zum Tilger 6 angeordnet ist, wodurch sich folgende Vorteile ergeben. Zum einen wird durch eine verringerte Summensteifigkeit der beiden in Reihe geschalteten Federsätze 10 und 20 eine Vorentkopplung vor dem Tilger 6 verbessert, so dass dieser kleiner ausgeführt werden kann und das System bereits bei niedrigerer Drehzahl überkritisch arbeitet, gut zu sehen in der Figur 3, die gestrichelte und gepunktete Linie. Weiter fällt die Zwischenmasse 3 ohne die Anbindung an den Tilger 6 deutlich kleiner aus, so dass keine störende Zwischenmassenresonanz im Betriebsbereich entstehen. Weiter ist die Wandlerüberbrückungskupplung 72 auf der Ausgangsseite der Drehmomentübertragungsanordnung 1 angeordnet, zwischen dem Tilger 6 und dem Getriebe 33. Dies ist vorteilhaft, da durch den Kupplungsschlupf die Ordnungsabstimmung des Tilgers 6 nicht beeinträchtigt wird. Auch wird durch den Kupplungsschlupf der Wandlerüberbrückungskupplung 72 die Ausbildung der oben beschriebenen Schwingungsknoten reduziert bzw. verhindert, wie in der Figur 3 mit der gepunkteten Linie gezeigt.

Die in der Figur 2 dargestellte Anordnung verwendet aus Gründen der besseren Vergleichbarkeit prinzipiell die gleiche schematische Ausführung von und Anzahl an Unterbaugruppen, insbesondere Federsätzen, wie in der Figur 1 beschrieben.

Dies ist allerdings nur exemplarisch zu verstehen. Funktionell sind beispielsweise auch andere Ausführungen des Torsionsdämpfers 10, 20 möglich, unter anderem auch als ein- oder mehrreihiges ZMS. Auch der Tilger 6 kann auf unterschiedliche Arten ausgeführt sein, wobei Konstruktionen als drehzahladaptiver Tilger nach dem Prinzip Sarrazin, Salomon oder DFTvar besonders vorteilhaft sind.

Die Figur 3 zeigt das umgelenkte Moment über die Drehzahl von einem Drehmomentübertragungssystem nach dem Stand der Technik, eine Variante ohne Schlupf und eine Variante mit Schlupf Mode 2.

Die Figur 4 zeigt eine weitere Topologieanordnung, wie bereits in den Figuren 1 und 2 beschrieben, jedoch mit nur einem Federsatz 10, hier als ein Zweimassenschwungrad mit einem einreihigen Federsatz.

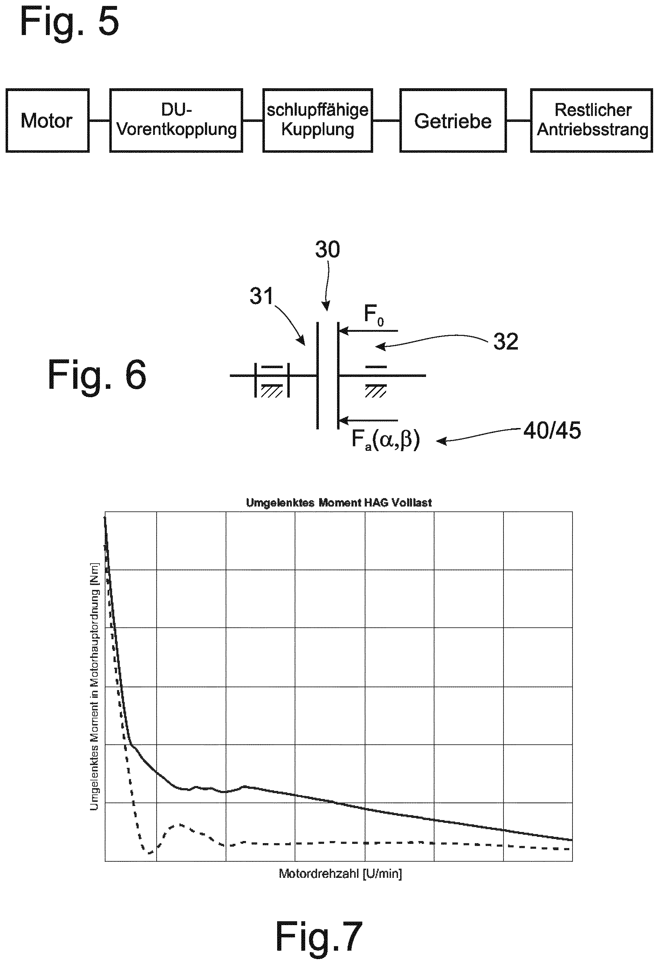

Die Figur 5 zeigt eine Vorteilhafte Topologie zur Drehschwingungsreduzierung im Antriebsstrang. Drehungleichförmigkeitsvorentkopplung bezeichnet in diesem Sinn ein System, welches die Drehungleichförmigkeit vor der schlupffähigen Kupplung 30 reduziert. Dieses kann wie im konkreten Beispiel oben aus einer Anordnung aus Torsionsfedern, Massen und Tilgern bestehen. Es sind jedoch auch andere Prinzipien möglich, wie beispielsweise eine Drehungleichförmigkeitsentkopplung mit zwei parallelen Drehmomentübertragungswegen und einer Kopplungsanordnung, ein Gasfeder-Torsionsdämpfer oder eine Anordnung mit Fliehkraft-Federn.

Bei der geforderten schlupffähigen Kupplung 30 kann es sich gleichzeitig auch um eine Anfahrkupplung handeln. Dies ist aber nicht zwingend notwendig. Die Anfahrkupplung kann ansonsten an einer anderen, beliebigen Position des Antriebsstrangs platziert sein. Genauso kann es sich bei der schlupffähigen Kupplung aber auch um eine oder auch mehrere Kupplungen des Getriebes handeln, die je Gang, Aufgaben bei der Getriebeschaltung und/oder der Drehungleichförmigkeitsentkopplung durch Schlupf lösen. Die Art des Getriebes, beispielsweise als ein Automatgetriebe (AT), Doppelkupplungsgetriebe (DCT), automatisiertes Schaltgetriebe (ASG), Stufenlosgetriebe oder manuelles Getriebe (MT) und die Ausführung des Antriebsstrangs als Front- Heck- oder Allrad-Antrieb, auch in hybridisierter Bauart, sind beliebig. Insbesondere bei MT- und DCT-Getrieben ist die beschriebene Topologie bereits Standard, in Kombination mit AT-Getrieben jedoch nicht. Allerdings ist insbesondere bei MT-Getrieben, aber auch bei trockenlaufenden DCT-Getrieben die dort eingesetzte Anfahrkupplung nicht geeignet, auf Dauer durch Schlupf eine Funktion zur Drehungleichförmigkeitsentkopplung einzunehmen. Insofern ist auch für diese Antriebsstränge der vorgeschlagene Aufbau neu.

Die Figur 6 zeigt vereinfacht ein Prinzipschaltbild einer schlupffähigen Kupplung 30 nach einem verbessertes Verfahren, dem Kupplungsschlupf Mode 2.

Mit der bereits beschriebenen Topologie kann bei gleichen Steifigkeitswerten des Federsatzes 10, 20 bereits bei niedriger Drehzahl eine deutlich verbesserte Entkopplung erreicht werden und bereits Kupplungsschlupf Mode 1 wirkt effektiv zur weiteren Verbesserung der Entkopplung bzw. zur Vermeidung von Schwingungsknoten. Allerdings führt der Kupplungsschlupf generell zu Reibungsverlusten, welche bei hohem Motormoment und hoher Schlupfdrehzahl inakzeptable Werte annehmen können. Begrenzend wirken hier der steigende Kraftstoffverbrauch und somit $CO_2$-Ausstoß sowie die erzeugte Reibungswärme, welche abgeführt werden muss.

Ziel der vorliegenden Erfindung ist es, bei niedriger Schlupfdrehzahl die Entkopplungswirkung des Schlupfes zu steigern.

Dies wird dadurch erreicht, dass das von der Kupplung übertragbare Moment aktiv moduliert wird. Dieses Verfahren wird daher aktiver Schlupf Mode 2 genannt.

Dabei ist F0 eine Kraft, welche von einem Schlupfregler eingeregelt wird, um eine bestimmte mittlere Drehzahldifferenz zwischen einer Eingangsseite 31 der Schlupfanordnung 30 und einer Ausgangsseite 32 der Schlupfanordnung 30 zu erreichen. In einem stationären Betriebspunkt kann F0 als konstant angesehen werden.

Das übertragbare Moment der Schlupfkupplung 30 berechnet sich so weit zu

$$M\_üb = F\_0 \cdot r \cdot \mu(n\_Schlupf)$$

mit

    r = mittlerer Reibradius

    $\mu$ = Reibwert der Kupplungsbeläge, welcher von der Schlupfdrehzahl n_Schlupf abhängt.

Fa($\alpha$,) ist eine zusätzliche Kraft, deren Amplitude in Abhängigkeit von einem Bezugswinkel $\alpha$ und einer Phasenverschiebung $\beta$ verläuft.

Die Abhängigkeit kann beispielsweise über eine Sinusfunktion gegeben sein.

Als Bezugswinkel kommt beispielsweise die Kurbelwellen-Stellung in Frage. Für eine Abstimmung auf die Haupt-Motorordnung bei einem 4-Zylinder 4-Takt-Motor würde dies bedeuten:

$$F\_a\,(α,β) = F\_a \cdot \sin\,(2a+β)$$

Das übertragbare Moment berechnet sich damit wie folgt:

$$M\_üb = [\![F]\!]\_0 + F\_a \cdot \sin\,(2a+β)] \cdot r \cdot \mu(n\_Schlupf)$$

In der Figur 7 ist zu sehen, welchen Effekt die Modulation des Kupplungsmoments auf die Drehschwingungsentkopplung der Motor-Hauptordnung bewirkt. Verglichen mit Schlupf Mode 1 wird durch den Schlupf Mode 2 die Drehungleichförmigkeit noch einmal deutlich verringert, und das bei gleicher mittlerer Schlupfdrehzahl und entsprechend gleichen Reibungsverlusten.

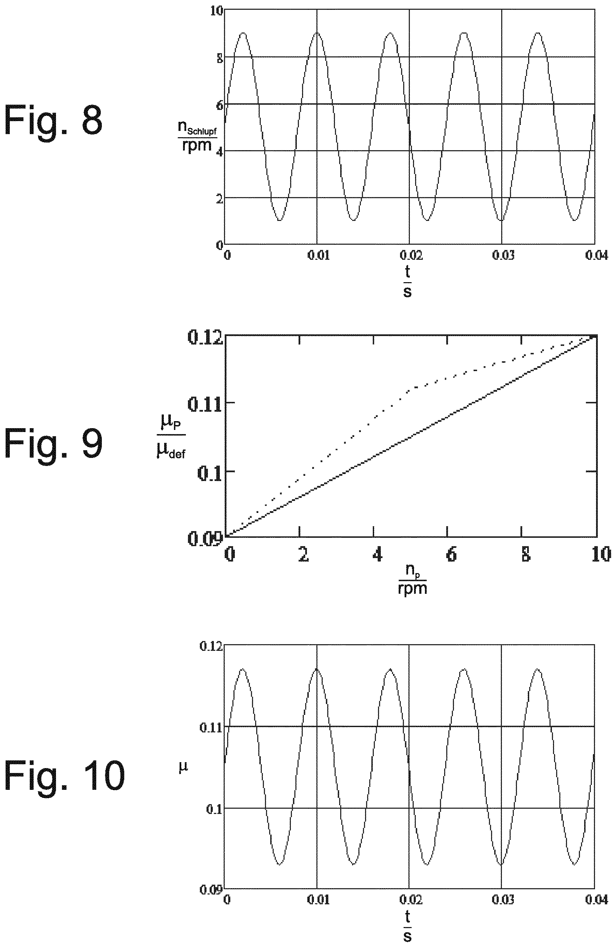

Die Figuren 8, 9 und 10 verdeutlichen die Herleitung der Funktionsweise des aktiven Schlupfes Mode 2. Aufgrund von nichtlinearen Zusammenhängen und der nichtharmonischen Anregung im realen Antriebsstrang, lässt sich die Wirkungsweise der Modulation des übertragbaren Kupplungsmoments in Bezug auf die DU-Entkopplung nur unter stark vereinfachten Bedingungen anschaulich herleiten.

Hierzu wird eine in der Hauptordnung, hier die 1. Motorordnung, eine rein sinusförmige Drehungleichförmigkeit an der Eingangsseite der Kupplung angenommen. Mit einer konstanten Kupplungskraft F0 stellt sich in diesem Beispiel dann ein mittlerer Schlupf von 5 rpm ein, welcher mit einer Amplitude von 4 rpm um den Mittelwert schwingt, vergleiche die Figur 8.

Der Verlauf des Reibwertes der Schlupfkupplung über den Schlupf wird in diesem Bereich linearisiert, dargestelllt mit der durchgezogene Linie, in der Figur 9.

Somit ergibt sich auch für den Reibwert ein sinusförmiger Verlauf über der Zeit, zu sehen in der Figur 10. Der mittlere Reibwert beträgt hier $\mu\_0=0.105$ und die Amplitude $\mu\_a=0.012$.

Für das übertragbare Moment gilt bei Modulation in Hauptordnung wiederum:

$$M\_üb=⟦[F]\_0+F\_a·sin\ (a+β)]·r·[μ\_0+μ\_a·sin\ (α)\ ]$$

Der Winkel a berechnet sich hierbei zu $\alpha=2·\pi·n·t$ mit n=Drehzahl t=Zeit

Mit einer optimalen Phasenverschiebung $\beta=180°=\pi$ folgt $\sin(\alpha+\pi)=-\sin(a)$ Durch Ausmultiplizieren von M\_üb:

$$M\_üb=r·[F\_0\ μ\_0+(F\_0\ μ\_a-F\_a\ μ\_0\ )\ sin\ (α)-F\_a\ μ\_a\ sin^2\ ⟦(α)⟧\ ]$$

Mit

$$sin^2\ ⟦(α)=1/2(1-cos\ (2α)⟧)$$

folgt:

$$M\_üb=r·[⟦(F⟧\_0\ μ\_0-(F\_a\ μ\_a)/2)+(F\_0\ μ\_a-F\_a\ μ\_0\ )\ sin\ (α)+(F\_a\ μ\_a)/2$$
$$cos\ (2α)]$$

Die Summanden in der eckigen Klammer dieses Terms lassen sich unterschiedlichen Ordnungen zuweisen:

0. Ordnung: $F\_0\ \mu\_0-(F\_a\ \mu\_a)/2$
mittleres Moment
Um das gleiche mittlere übertragbare Moment zu erhalten, sind für unterschiedliche Subtrahenden $(F\_a\ \mu\_a)/2$ unterschiedliche Kräfte $F\_0$ notwendig (wird durch Schlupfregler nachgeregelt).

1. Ordnung: $(F\_0\ \mu\_a-F\_a\ \mu\_0)\ sin\ (a)$
Hauptordnung in diesem Beispiel
Lässt sich unter den vereinfachten Annahmen bei Wahl von $F\_a=(F\_0\ \mu\_a)/\mu\_0$ komplett auslöschen! □ Hierin ist der Effekt der Erfindung begründet!

2. Ordnung: $(F\_a\ \mu\_a)/2\ cos\ (2\alpha)$
Durch die Modulation entsteht eine neue Ordnung mit doppelter Modulationsfrequenz.

Die Amplitude dieser Ordnung ist jedoch vergleichsweise gering und zudem werden höhere Ordnungen vom Antriebsstrang besser gedämpft als niedrige, so dass der positive Effekt der Reduzierung der Hauptordnung überwiegt. Es handelt sich bei dieser Herleitung um ein stark vereinfachtes Modell. Aufgrund der abweichenden Bedingungen in der Realität, ist zwar mit diesem Verfahren praktisch keine vollständige Auslöschung der Haupt-Motorordnung möglich, jedoch eine deutliche Reduzierung, wie in der Figur 7 zu sehen ist.

Dabei wird die Die Funktion des Kupplungsschlupfes mit aktiver Modulation, also Kupplungsschlupf Mode 2, durch folgende Parameter bestimmt.

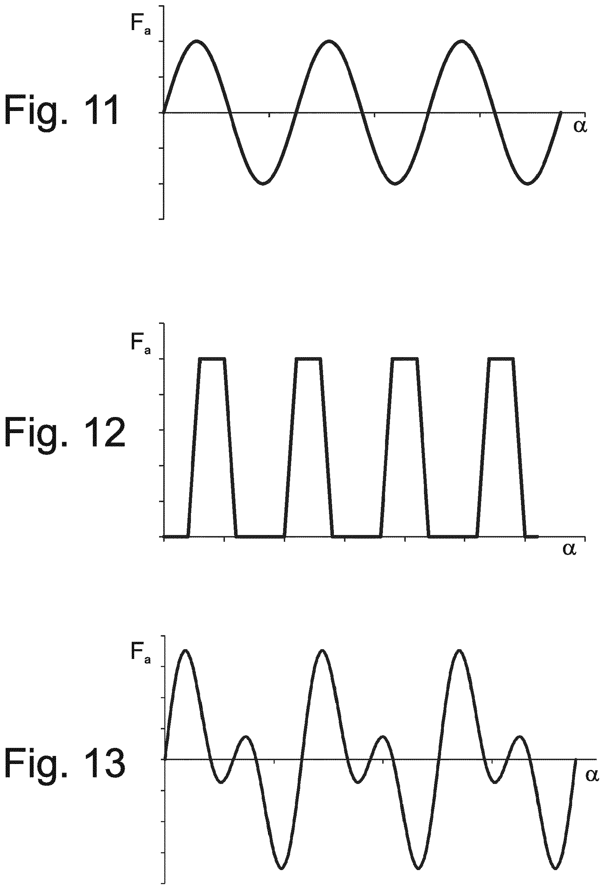

Zum einen ist die die Schwingungsform. Der optimale Verlauf des übertragbaren Kupplungsmoments über der Zeit hängt vom Verlauf der Drehungleichförmigkeit der Hauptordnung am Kupplungseingang ab. Im vorangegangenen Beispiel war die angenommene Anregung rein sinusförmig und der optimale Verlauf der modulierten Kupplungskraft ebenfalls. In einem realen Antriebsstrang hat die bereits vorentkoppelte Hauptordnung des Wechselmoments am Kupplungseingang einen zumindest näherungsweise sinusförmigen Verlauf, so dass auch hier die Modulation des Kupplungsmoments über eine Sinusfunktion beschrieben werden kann, um gute Ergebnisse zu erreichen, zu sehen in der Figur 11. Es können jedoch auch andere harmonische sowie nichtharmonische Funktionen zugrunde gelegt werden, wie beispielsweise ein trapezförmiger Verlauf, zu sehen in der Figur 12. Ebenso kann die Schwingungsform darauf optimiert werden, mehrere Motorordnungen zu reduzieren. In einem einfachen Fall ist dies dadurch möglich, dass die Modulation durch eine Überlagerung zweier Sinusschwingungen beschrieben wird, wobei die eine Sinusschwingung beispielsweise die Zündfrequenz und die andere die doppelte Zündfrequenz aufweist.

Die Aufteilung der Betätigungskraft der Kupplung in eine über den Schlupfregler vorgegebene, im stationären Betriebspunkt konstante Kraft F0, und eine dynamische Kraft Fa zur Modulation des übertragbaren Moments, ist jedoch vornehmlich ein Gedankenmodell zur Beschreibung des Wirkprinzips der Erfindung. Es ist Sache der konstruktiven Umsetzung, ob tatsächlich zwei Kräfte überlagert werden, z.B. im Sinne von zwei separaten Aktoren, ob die Kraft, welche ein einzelner Aktor auf die Kupplung aufbringt, entsprechend variiert wird, oder ob Mischformen eingesetzt werden.

Entscheidend für das Verfahren ist lediglich, dass das übertragbare Moment der Kupplung in einer geeigneten Form und mit geeigneten Parametern dynamisch verändert wird. Für eine Abstimmung auf die Haupt-Motorordnung muss die Modulationsfrequenz der Zündfrequenz des Verbrennungsmotors entsprechen. Somit steigt sie in Abhängigkeit zur Motordrehzahl an. Für einen 3-Zylinder 4-Takt-Motor ergibt sich beispielsweise für den Drehzahlbereich von 1000 bis 2000 rpm eine notwendige Modulationsfrequenz von 25 bis 50 Hz. Bei Motoren mit Zylinderabschaltung ist es besonders vorteilhaft, wenn die Regelung der Schlupfbetätigung eine Umschaltung zwischen den Ordnungen des Voll- und Abschaltbetriebs ermöglicht. Ebenso ist eine Auslegung auf höhere Ordnungen, bzw. eine kombinierte Auslegung auf mehrere Ordnungen möglich.

Die optimale Phasenlage der Modulation beträgt 180° in Bezug auf die Schwingung der Eingangsdrehzahl der Schlupfanordnung, wie auch schon in der theoretische Herleitung der Funktion vorangehend beschrieben. Besonders vorteilhaft sind Phasenverschiebungen im Bereich 180° ± 45°. Bei zu geringer Phasenverschiebung kommt es zur einer Vergrößerung der Drehungleichförmigkeit, welche bei Phasengleichheit maximal wird.

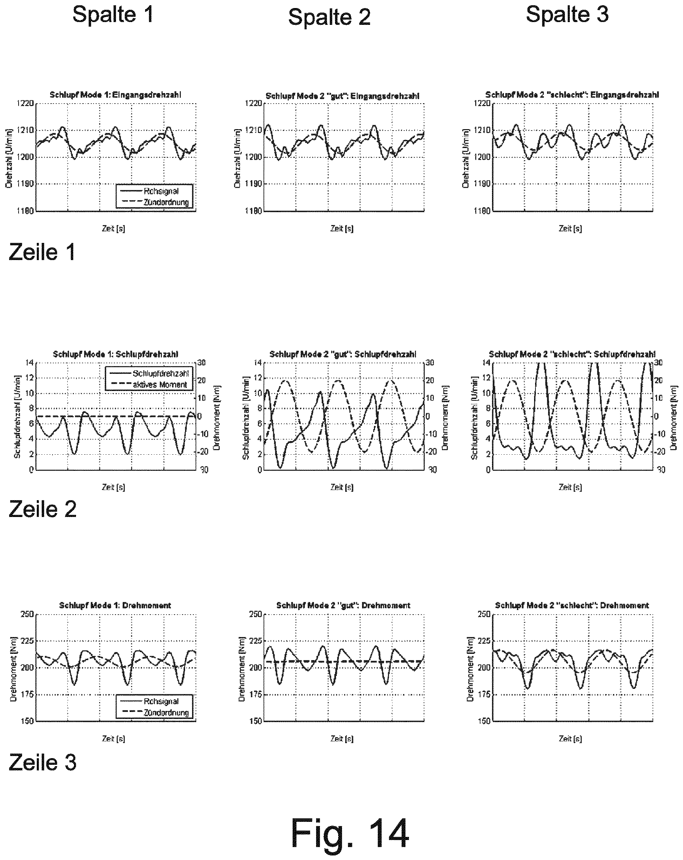

Die Figur 14 zeigt verschiedene Größen im Antriebsstrang eines Kraftfahrzeugs gemäß der Figur 4, für drei verschiedene Fälle:

    1. Spalte: Schlupf Mode 1
    2. Spalte: Schlupf Mode 2 - Phasenlage in einem günstigen Bereich
    3. Spalte: Schlupf Mode 2 - Phasenlage in einem ungünstigen Bereich

In der obersten Zeile ist jeweils die Drehzahl am Eingangsbereich 31 der Schlupfkupplung 30 dargestellt. Aufgrund der Drehungleichförmigkeit des Verbrennungsmotors schwankt die Drehzahl trotz Vorentkopplung durch beispielsweise ein ZMS und einen drehzahladaptiven Tilger 6, zu der Anordnung vergleiche die Ausführungen in den Figuren 5 und 6, um eine mittlere Drehzahl, hier ~ 1205 U/min. Der Anschaulichkeit halber ist neben dem Rohsignal auch die Schwingung der Drehzahl in Motor-Zündordnung eingezeichnet. Diese kann mittels schneller Fourier-Transformation aus dem Zeitverlauf der Gesamtschwingung ermittelt werden.

In der zweiten Zeile sind die Schlupfdrehzahl ns zwischen Eingangsseite 31 und Ausgangsseite 32 der Schlupfkupplung 30, sowie das aktive Moment Ma dargestellt. Das aktive Moment Ma ist direkt proportional zur oben aufgeführten aktiven Kraftkomponente Fa und berechnet sich zu: $M\_a = F\_a \cdot r \cdot \mu$

Beim aktiven Schlupf Mode 1 in der ersten Spalte ist die Kraft Fa und somit auch das Moment Ma gleich null. Der sich einstellende Verlauf des Schlupfes ist somit das Resultat der vom Schlupfregler eingestellten Betätigungskraft F0, um einen mittleren Schlupf (hier 5 1/min) zu erhalten, dem Verlauf der Anregung, d.h. der Drehzahl- bzw. Drehmomentschwankung an der Kupplung und dem Verlauf des Reibkoeffizienten der Kupplung über der Schlupfdrehzahl.

Beim aktiven Schlupf Mode 2 in der zweiten und dritten Spalte ist ein sinusförmiger Verlauf der Kraftkomponente Fa bzw. des aktiven Moments Ma mit einer bestimmten Amplitude und mit der Zündfrequenz des Verbrennungsmotors vorgegeben.

In der zweiten Spalte beträgt die Phasenlage des Verlaufs des aktiven Moments Ma gegenüber dem Verlauf der Drehzahl vor der Kupplung in Zündordnung im Diagramm darüber ca. 180°. Anders ausgedrückt: In den Zeitbereichen, in denen die Drehzahlschwankung in Zündordnung Minima aufweist, hat das aktive Moment Ma Maxima und umgekehrt. Dies stellt eine optimierte Abstimmung des aktiven Schlupfes Mode 2 dar.

In der dritten Spalte ist ein ungünstiger Fall dargestellt, in dem das aktive Moment in etwa phasengleich zur Drehzahl am Eingangsbereich der Kupplung verläuft.

Die Diagramme in der dritten Zeile zeigen das von der Kupplung übertragene Drehmoment, wiederum als ursprüngliches Rohsignal und als dessen Anteil in Motor-Zündordnung. Zu erkennen ist, dass mit dem aktiven Schlupf Mode 2 mit optimierter Phasenlage, siehe Spalte 2, die Ungleichförmigkeit des Moments in Motor-Hauptordnung fast vollständig geglättet wird. Mit der ungünstigen Phasenlage, siehe Spalte 3, wird die Amplitude der Momenten-Ungleichförmigkeit gegenüber dem aktiven Schlupf Mode 1, siehe Spalte 1, sogar noch erhöht.

Die Phasenlage der Modulation muss nicht exakt 180° in Bezug auf die Drehzahl am Eingang der Schlupfvorrichtung betragen um eine positive Wirkung zu erzielen. Um eine Verbesserung gegenüber dem aktiven Schlupf Mode 1 zu erreichen, ist es jedoch vorteilhaft, wenn die Phasenverschiebung im Bereich 180° ± 45°liegt.

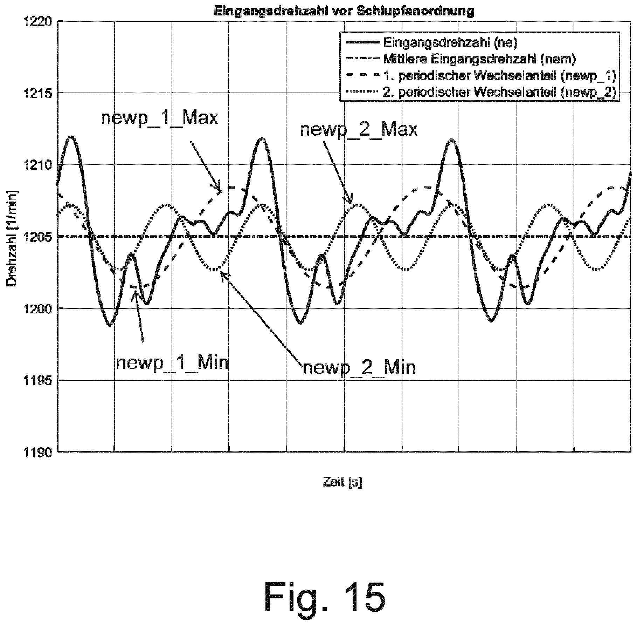

Die Figur 15 zeigt den Verlauf der Drehzahl im Eingangsbereich 31 der Schlupfanordnung 30, wie auch in der Figur 14, mittlere Spalte, obere Zeile dargestellt, für einen statischen Betriebspunkt.

Die Eingangsdrehzahl (ne) besitzt einen Mittelwert (nem), hier 1205 1/min, um welchen ein Wechselanteil (new), hier nicht eigens dargestellt, da deckungsgleich mit dem Verlauf von ne, schwingt. Der Verlauf des Wechselanteils hängt im Wesentlichen ab von der Beschaffenheit des Verbrennungsmotors 82, insbesondere der Anzahl an Zylindern, und der Vorentkopplung. Der Wechselanteil kann mittels schneller Fourier-Transformation (FFT) näherungsweise als Überlagerung sinusförmiger Schwingungen (newp_i) beschrieben werden. Die niedrigste Frequenz einer solchen periodischen Teilschwingung des Wechselanteils ist die Zündfrequenz des Motors. Die Frequenzen weiterer Harmonischer Schwingungen stehen in einem ganzzahligen Verhältnis zur Zündordnung. In einem realen Antriebsstrang können auch Schwingungsanteile mit nicht ganzzahligem Bezug zur Zündfrequenz auftreten, diese seien hier jedoch vernachlässigt. In der Figur 15 sind beispielhaft die periodischen Wechselanteile in Motor-Hauptordnung (newp_1) und in doppelter Motor-Hauptordnung (newp_2) dargestellt. Die Amplituden der Wechselanteile schwanken zwischen einem Minimum (newp_i_Min) und einem Maximum (newp_i_Max). Der Verlauf eines solchen Wechselanteils ist eine Bezugsgröße für die Phasenverschiebung $\beta$ der Modulation der Aktivierung der Schlupfanordnung um eine Reduzierung der Drehungleichförmigkeit in der entsprechenden Motorordnung zu erreichen.

Es existiert eine optimale Amplitude des aktiven Moments Ma, welche vorwiegend vom mittleren Motormoment 0. Ordnung und der mittleren Schlupfdrehzahl abhängt. Zwischen der optimalen Amplitude und dem mittleren Moment bei verschiedenen Lastzuständen besteht ein annähernd linearer Zusammenhang.
Besonders geeignet sind Amplituden der Modulation des von der Schlupfanordnung übertragbaren Moments zwischen 5 und 15% des mittleren Motormoments.

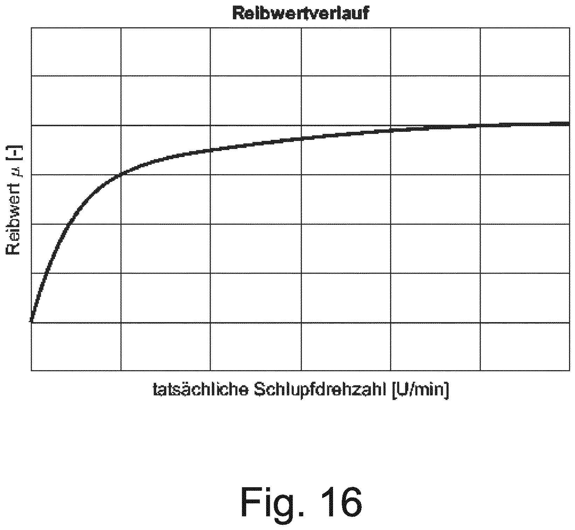

Der effektiv wirkende Reibwert, insbesondere einer nasslaufenden Reibkupplung, wie sie üblicherweise in Kraftfahrzeug-Antriebssträngen eingesetzt wird, hängt von der momentanen Differenzdrehzahl zwischen An- und Abtrieb der Kupplung ab. Üblicherweise wird der Verlauf maßgeblich durch Additive im Öl, Material und Geometrie der Beläge so angepasst, dass sich eine degressive Steigung über der Schlupfdrehzahl ergibt. Ein üblicher Reibwertverlauf ist in der Figur 16 dargestellt.

Für die hier vorgeschlagene Schlupfkupplung ist es besonders vorteilhaft, wenn der Reibwert in einem Bereich zwischen 0,05 und 0,15 liegt und bis zu einer möglichst hohen Schlupfdrehzahl steil ansteigt. Besonders günstig sind Steigungen des Reibwerts über der Drehzahl zwischen 0,001/rpm und 0,005/rpm in einem Schlupfbereich bis 30 rpm. Die mittlere Schlupfdrehzahl wird von einem Schlupfregler eingeregelt. Da Schlupf generell Reibungsverluste verursacht, welche in Form von Wärmeenergie abgeführt werden müssen, ist eine möglichst geringe mittlere Schlupfdrehzahl anzustreben. Günstig sind für den aktiv modulierten Schlupf mittlere Schlupfdrehzahlen kleiner gleich 30 rpm, besonders günstig kleiner gleich 10 rpm.

Der aktive Schlupf Mode 2 bringt vor allem im niedrigen und bis in den mittleren Drehzahlbereich eine deutliche Verbesserung der Entkopplung, verglichen mit dem bekannten Schlupf Mode 1. Dieser hat den Vorteil, des geringeren Aufwands bei der Regelung und bei der Betätigung der Schlupfkupplung. Insbesondere bei hoher Drehzahl und abhängig vom Schwingungsverhalten des Antriebsstrangs, kann in bestimmten Betriebszuständen für die DU-Entkopplung auch kein Schlupf notwendig sein.
Es ist somit sinnvoll, eine bedarfsorientierte Betriebsstrategie zu implementieren. Diese kann sich an folgendem Schema orientieren:

|  | Niedrige Drehzahl | Mittlere Drehzahl | Hohe Drehzahl |
|---|---|---|---|
| Hohe Last | Schlupf Mode 2 | Schlupf Mode 2 | Schlupf Mode 1 |
| Mittlere Last | Schlupf Mode 2 | Schlupf Mode 1 | kein Schlupf |
| Niedrige Last | Schlupf Mode 1 | kein Schlupf | kein Schlupf |

Besondere Betriebszustände, wie gangabhängig auftretende Schwingungsknoten, Anfahren oder Resonanzen, sind dabei ebenfalls zu berücksichtigen.

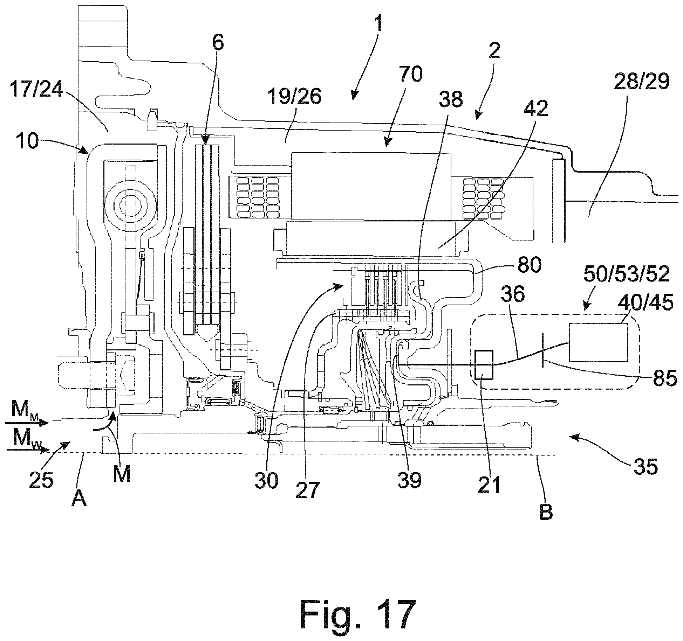

Die Figur 17 zeigt eine Drehmomentübertragungsanordnung 1 für ein automatisiertes Hybridgetriebe 2. Dabei ist ein Grundaufbau wie folgt in einer Reihenfolge eines Drehmomentweges M, der ein mittleres Drehmoment Mm mit überlagerten Wechselmomenten Mw von einem Eingangsbereich 25, der beispielsweise von einem Verbrennungsmotor gebildet werden kann zu einem Ausgangsbereich 35, der beispielsweise von einer Ausgangswelle eines Getriebes gebildet werden kann. Die Drehmomentübertragungsanordnung 1 gliedert sich in drei Raumbereiche auf. Ein erster Raumbereich 17, der auch als ein Trockenraum 24 bezeichnet werden kann, ein nachfolgender zweiter Raumbereich 19, der auch als ein Feuchtraum 26 bezeichnet werden kann und ein nachfolgender dritter Raumbereich 28, der auch als ein Nassraum 29 bezeichnet werden kann. Ein erster Torsionsdämpfer 10 befindet sich in dem ersten Raumbereich 17 und ist als ein Zweimassenschwungrad ausgeführt. Dieser kann mit einer Fettfüllung betrieben werden und wird vorzugsweise in dem Trockenraum 24, in dem kein viskoses Medium enthalten ist, platziert. Nach dem Zweimassenschwungrad 10 ist ein drehzahladaptiver Tilger 6 im zweiten Raumbereich 19 angeordnet. Dieser befindet sich im ölnebelhaltigen Arbeitsraum 26. Vorteilhaft bei dieser Variante sind eine effiziente und kostengünstige Bauraumausnutzung, sowie eine daraus resultierende hohe Güte der Entkopplung von Drehungleichförmigkeiten, die von dem Antriebsaggregat 82, beispielsweise die Verbrennungsmaschine eingeleitet werden. Nachfolgend ist eine Schlupfanordnung 30 in Form einer Lamellenkupplung angeordnet, wobei ein Innenlamellenträger 27 drehfest mit der Tilgereinheit 6 verbunden ist. Ein Außenlamellenträger 80 der Schlupfanordnung 30 ist drehfest mit dem Ausgansbereich 35 verbunden. Weiter ist mit dem Außenlamellenträger 28 ein Rotor 42 eines elektrischen Antriebsaggregates 70, das hier als Hybridmotor verwendet wird, verbunden. Ein Ausrückkolben 38 der Schlupfanordnung 30 wird von einer hydraulischen Arbeitskammer 39 druckbeaufschlagt. Dabei steht die hydraulische Arbeitskammer 39 mit einer externen Aktivierung 40;45 in Wirkverbindung, die hier als ein hydraulisches Aggregat 50 mit einer hydraulischen Pumpe 53 und einem Hochdruckspeicher 52 vorgesehen ist. Zwischen dem hydraulischen Aggregat 50 und der Arbeitskammer 39 der Schlupfanordnung 30 ist eine Druckleitung 36 vorgesehen, sowie ein aktiven Pulsator 21. Der aktive Pulsator 21 kann beispielsweise ein elektromagnetisch oder piezoelektrisch betriebener Pulsatoren sein, oder auch unterstützend als beispielsweise axial schwingfähiges Feder-Masse-System ausgeführt sein.

Weiterhin kann die Druckpulsation durch parallel zur Strecke angeordnete zusätzliche Pulsationspumpen, beispielsweise kleine Elektromotoren mit exzenterbetriebenen Axialzylindern, deren Pulsationsfrequenz über die Drehzahl des antreibenden E-Motors einstellbar ist erzeugt werden. Hierdurch kann ohne eine erforderliche Änderungen an dem hydraulischen Aggregat 50, das meist sowieso für die Ansteuerung der Schlupfkupplung 30, die hier auch als eine Anfahrkupplung verwendet werden kann, vorhanden ist und ebenso eine vorhandene Druckleitung 36 eine recht preiswerte Aktuatorik dargestellt werden. Eine unterstützend recht steif ausgeführte Kupplungskonstruktion trägt zur Regelpräzision bei. Dabei ist eine Sensierung der Drehmomentspitzen bis zur Ansteuerung des aktiven Pulsators gesondert auszuführen. Dabei kann die Schlupfanordnung durch eine Kupplungen als mitgenutzte Systemelemente, beispielsweise eine Trennkupplungen in einem Hybridsystemen, das im Drehmomentfluss beispielsweise hinter einem Drehungleichförmigkeitsreduzierungssystem und auch radial innerhalb einer E-Maschine angeordnet sein kann, wie hier gezeigt, oder eine anfahrtaugliche Kupplungen, vergleichbar angeordnet, beispielsweise auch in einer Bauart einer hydrodynamischen gekühlten Kupplung (HCC) oder einer Doppelkupplung oder einer Triplekupplung, die die Funktionen von Doppelkupplung und K0 Kupplung, also eine Kupplung, die den Elektromotor eins Hybridantriebes zu und abschaltet, vereint, oder eine oder je nach dem Drehmomentfluss im Getriebe in der verschiedenen Gängen bedarfsweise mehrere getriebeinterne Kupplungen oder Bremse, die aktiv schlupfend betrieben werden. Dabei kann eine der genutzten Kupplungen oder Bremsen ein integriertes Anfahrelement sein. Dabei ist die Schlupfanordnung 30 von dem hydraulischen Aggregat 50 über den aktiven Pulsator 21 so anzusteuern, dass, überlagert zu der bisher bereits üblichen Einstellung eines konstanten Schlupfes eine hochfrequente , beispielsweise ein Frequenzbereiche beim 3-Zylinder von ca. 23 Hz bis 50 Hz, beim 4-Zylinder ca. 33 bis 66Hz und beim 6-Zyl. 50 bis 100Hz, variable Schlupfmodulation ermöglicht wird, die die hinter einer Torsionsdämpfungseinrichtung, wie hier das Zweimassenschwungrad 10 und die Tilgereinheit 6, noch verbleibenden Restdrehungleichförmigkeiten herausfiltert. Dabei sei für die Wirkweise auf die Figurenbeschreibung 1 bis 16 verwiesen.

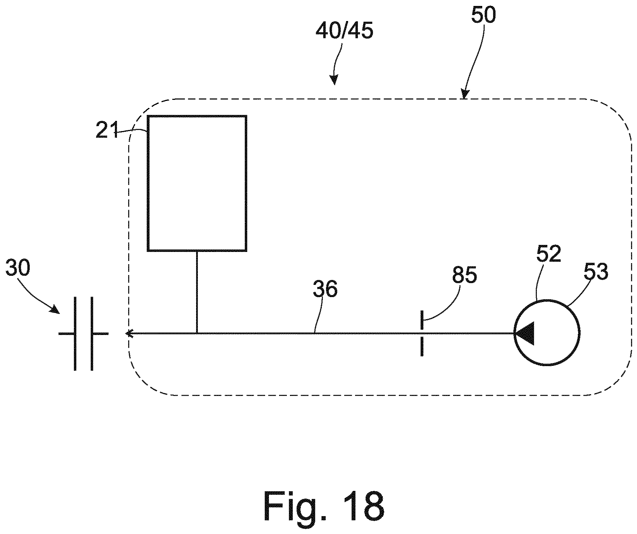

Die Figur 18 zeigt eine schematische Darstellung einer erfindungsgemäßen Ansteuerung einer Schlupfanordnung 30, hier als eine Reibscheibenkupplung dargestellt. Dabei erzeugt ein hydraulisches Aggregat 50, das hier als ein externer Aktivator 40,45 verwendet wird und eine hydraulische Pumpe 53, sowie einen Hochchdruckspeicher 52 umfasst, einen hydraulischen Basisdruck, der auf die Schlupfanordnung/ Schlupfkupplung 30 wirkt und die Schlupfkupplung 30 folglich ein gewünschtes Drehmoment übertragen lässt. Dabei wird in einer Druckleitung 36 zur Kupplung 30 neben einem niederfrequent arbeitenden Kupplungsdruckregelventil, das den Basisdruck für das gewünschte Drehmoment und den gewünschten statischen Kupplungsschlupfes einstellt, ein zusätzlicher hochfrequent arbeitsfähiger aktiver Pulsator 21, als eine externe Aktivierung 40;45 vorgesehen. Dieser sollte zugunsten einer Regelpräzision und zu einer Reduzierung des baulichen Aufwandes am besten am Ende der Strecke, also kurz vor oder bereits in der Kupplung 30 angeordnet sein.

Eine Blende 24 ist hier beispielhaft für einen Tiefpassfilter zwischen der Getriebeölpumpe 53 und Getriebehydraulik in einer hydraulischen Strecke 36 zum aktiven Pulsator eingebaut.

Die Schlupfkupplung 30 wird dabei so angesteuert, dass, überlagert zu der bisher bereits üblichen Einstellung eines konstanten Schlupfes eine hochfrequent, beispielsweise ein Frequenzbereiche beim 3-Zylinder von ca. 23 Hz bis 50 Hz, beim 4-Zylinder ca. 33 bis 66Hz und beim 6-Zyl. 50 bis 100Hz, eine variable Schlupfmodulation ermöglicht wird, die die hinter einer Torsionsdämpfungseinrichtung, beispielsweise ein Zweimassenschwungrad und oder eine Tilgereinheit, beide hier nicht dargestellt, noch verbleibenden Restdrehungleichförmigkeiten herausfiltert.

**EP 3 478 981 B1**

Bezugszeichen

| | |
|---|---|
| 1 | Drehmomentübertragungsanordnung |
| 2 | Primärmasse |
| 3 | Zwischenmasse |
| 4 | Sekundärmasse |
| 6 | Tilgereinheit / drehzahladaptiver Tilgereinheit / variabler drehzahlfester Tilgereinheit / Tilger |
| 7 | Getriebeeingangswelle |
| 10 | 1. Federsatz / Torsionsdämpfer / Zweimassenschwungrad |
| 15 | Drehschwingungsdämpfungseinheit |
| 17 | erster Raumbereich |
| 19 | zweiter Raumbereich |
| 20 | 2. Federsatz Torsionsdämpfer / Zweimassenschwungrad |
| 21 | aktiver Pulsator |
| 24 | Trockenraum |
| 26 | Feuchtraum |
| 27 | Innenlamellenträger |
| 28 | dritter Raumbereich |
| 29 | Nassraum |
| 30 | Schlupfanordnung / Schlupfkupplung |
| 31 | Eingangsteil Schlupfanordnung |
| 32 | Ausgangsteil Schlupfanordnung |
| 33 | Getriebeeinheit |
| 35 | Ausgangsbereich |
| 36 | Druckleitung |
| 38 | Ausrückkolben |
| 39 | Arbeitskammer |
| 40 | externe Aktivierung |
| 45 | externe Aktivierung |
| 42 | Rotor |
| 50 | hydraulisches Aggregat |
| 52 | Hochdruckspeicher |
| 53 | hydraulische Pumpe |
| 70 | elektrisches Antriebsaggregat |
| 80 | Außenlamellenträger |
| 82 | Antriebsaggregat |
| 85 | Blende |
| M | Drehmomentweg |
| Mm | mittleres Drehmoment |
| Mw | überlagertes Wechselmoment |
| ne | Eingangsdrehzahl |
| na | Ausgangsdrehzahl |
| nm | mittlere Drehzahl |
| ns | Drehzahlschlupf |
| newp | überlagerter Wechselanteil |
| newp-i | periodische Schwingungen |
| newp_i_Min | Minimum einer periodischen Schwingung |
| newp_i_Max | Maximum einer periodischen Schwingung |

| | |
|---|---|
| A | Drehachse |
| B | Drehachse |
| DUE | Drehmomentübertragung |

**Patentansprüche**

1. Verfahren zur Übertragung und zur Dämpfung eines mittleren Drehmomentes (Mm) mit einem überlagerten Wechselmoment (Mw), in einer Drehmomentübertragungsanordnung (1) für einen Antriebsstrang eines Kraftfahrzeugs, umfassend einen um eine Drehachse (A) drehbaren Eingangsbereich (25) und einen um eine Drehachse (B) drehbaren Ausgangsbereich (35), wobei das mittlere Drehmoment (Mm) mit dem überlagerten Wechselmoment (Mw) entlang eines Drehmomentweges (M) von dem Eingangsbereich (25) zu dem Ausgangsbereich (35) übertragen wird, wobei der Eingangsbereich (25) der Drehmomentübertragungsanordnung (1) mit einer Eingangsdrehzahl (ne) um die Drehachse (A) und der Ausgangsbereich (35) der Drehmomentübertragungsanordnung mit einer Ausgangsdrehzahl (na) um die Drehachse (B) rotiert, wobei sich zumindest die Eingangsdrehzahl (ne) aus einer mittleren Drehzahl (nem) und einem überlagerten Wechselanteil (newp) zusammensetzt, wobei der Wechselanteil (new) näherungsweise durch eine Überlagerung periodischer Drehzahlschwingungen (newp_i) beschrieben werden kann, deren Frequenzen (f) im Wesentlichen in einem ganzzahligen Verhältnis (i) zur Zündfrequenz (Zf) stehen, wobei jede dieser periodischen Schwingungen (newp_i) ein Minimum (newp_i_Min) und ein Maximum (newp_i_Max) aufweist, wobei eine Schlupfanordnung (30) im Drehmomentweg (M) zwischen dem Eingangsbereich (25) und dem Ausgangsbereich (35) zur Übertragung des mittleren Drehmomentes (Mm) mit dem überlagerten Wechselmoment (Mw) und zur Erzeugung eines Drehzahlschlupfes (ns) zwischen der Drehzahl ne und der Drehzahl na im Drehmomentweg (M) vorgesehen ist,
**dadurch gekennzeichnet,**
**dass** die Schlupfanordnung (30) im Bereich der Maxima (newp_i_Max) zumindest eines periodischen Schwingungsanteils (newp_i) des Wechselanteils (newp) ein Maximum einer externen Aktivierung (40) des Drehzahlschlupfes (ns) und im Bereich der Minima (newp_i_Min) zumindest eines periodischen Schwingungsanteils (newp_i) des Wechselanteils (newp) ein Minimum einer externen Aktivierung (45) des Drehzahlschlupfes (ns) vorsieht.

2. Verfahren nach Anspruch 1, **dadurch gekennzeichnet, dass** die externe Aktivierung (40; 45) der Schlupfanordnung (30) von einem hydraulischen Aggregat erfolgt.

3. Verfahren nach Anspruch 2, **dadurch gekennzeichnet, dass** das hydraulische Aggregat (50) zumindest einen hydraulische Pumpe (53) und einen aktiven Pulsator (21) vorsieht.

4. Verfahren nach Anspruch 3, **dadurch gekennzeichnet, dass** der aktive Pulsator (21) örtlich der hydraulischen Pumpe (53) zugeordnet ist.

5. Verfahren nach Anspruch 3, **dadurch gekennzeichnet, dass** aktive Pulsator (21) örtlich der Schlupfanordnung (30) zugeordnet ist.

6. Verfahren nach einem der Ansprüche 1 bis 5, **dadurch gekennzeichnet, dass** die externe Aktivierung (40; 45) geeignet ist, an der Schlupfanordnung (30) einen Modulationsbereich von 23 bis 50 Hz oder einen Bereich von 33 bis 66 Hz oder einen Bereich von 50 bis 100 Hz vorzusehen

7. Verfahren nach einem der Ansprüche 1 bis 6, **dadurch gekennzeichnet, dass** die Schlupfanordnung (30) als ein Anfahrelement (60) verwendet wird.

8. Verfahren nach einem der Ansprüche 1 bis 6, **dadurch gekennzeichnet, dass** zusätzlich zu der Schlupfanordnung (30) ein Anfahrelement vorgesehen ist.

9. Verfahren nach einem der Ansprüche 7 oder 8, **dadurch gekennzeichnet, dass** die Schlupfanordnung (30) und/oder das Anfahrelement als eine Reibkupplung, oder als eine Lamellenkupplung, oder als eine hydrodynamische Kupplung, oder als eine Trennkupplung in Hybridantrieben, oder als eine Doppelkupplung oder eine Triplekupplung ausgeführt, oder als eine Bremse in Verbindung mit einem Planetengetriebe ausgeführt ist.

10. Verfahren nach einem der Ansprüche 3 bis 9, **dadurch gekennzeichnet, dass** der aktive Pulsator (21) elektromagnetsich oder piezoelektrisch betrieben ist, oder als eine Pulsationspumpe ausgeführt ist.

11. Verfahren nach einem der Ansprüche 1 bis 10, **dadurch gekennzeichnet, dass** die Drehachse (A) und die Drehachse (B) koaxial verlaufen oder dass die Drehachse (A) und die Drehachse (B) versetzt verlaufen.

**Claims**

1. Method for transmitting and for damping an average torque (Mm) with a superimposed alternating torque (Mw), in a torque-transmission arrangement (1) for a drive train of a motor vehicle, comprising an input region (25) which can rotate about a rotational axis (A) and an output region (35) which can rotate about a rotational axis (B), wherein the average torque (Mm) is transmitted with the superimposed alternating torque (Mw) along a torque path (M) from the input region (25) to the output region (35), wherein the input region (25) of the torque-transmission arrangement (1) rotates with an input rotational speed (ne) about the rotational axis (A), and the output region (35) of the torque-transmission arrangement rotates with an output rotational speed (na) about the rotational axis (B), wherein at least the input rotational speed (ne) is composed of an average rotational speed (nem) and a superimposed alternating component (newp), wherein the alternating component (new) can be described approximately by superimposition of periodic rotational oscillations (newp_i) whose frequencies (f) have essentially an integral relationship (i) with the ignition frequency (Zf), wherein each of these periodic oscillations (newp_i) has a minimum value (newp_i_Min) and a maximum value (newp_i_Max), wherein a slip arrangement (30) is provided in the torque path (M) between the input region (25) and the output region (35) for transmitting the average torque (Mm) with the superimposed alternating torque (Mw) and for generating a rotational speed slip (ns) between the rotational speed ne and the rotational speed na in the torque path (M),
   **characterized**
   **in that** the slip arrangement (30) provides a maximum value of external activation (40) of the rotational speed slip (ns) in the region of the maximum values (newp_i_Max) of at least one periodic oscillation component (newp_i) of the alternating component (newp), and a minimum value of external activation (45) of the rotational speed slip (ns) in the region of the minimum values (newp_i_Min) of at least one periodic oscillation component (newp_i) of the alternating component (newp).

2. Method according to Claim 1, **characterized in that** the external activation (40; 45) of the slip arrangement (30) is carried out by a hydraulic assembly.

3. Method according to Claim 2, **characterized in that** the hydraulic assembly (50) provides at least one hydraulic pump (53) and one active pulsator (21).

4. Method according to Claim 3, **characterized in that** the active pulsator (21) is assigned spatially to the hydraulic pump (53).

5. Method according to Claim 3, **characterized in that** the active pulsator (21) is assigned spatially to the slip arrangement (30).

6. Method according to one of Claims 1 to 5, **characterized in that** the external activation (40; 45) is suitable for providing a modulation range from 23 to 50 Hz or a range from 33 to 66 Hz or a range from 50 to 100 Hz on the slip arrangement (30).

7. Method according to one of Claims 1 to 6, **characterized in that** the slip arrangement (30) is used as a starter element (60).

8. Method according to one of Claims 1 to 6, **characterized in that** in addition to the slip arrangement (30) a starter element is provided.

9. Method according to one of Claims 7 and 8, **characterized in that** the slip arrangement (30) and/or the starter element are/is provided as a friction clutch or as a multi-disc clutch or as a hydrodynamic clutch or as a separating clutch in hybrid drives or as a double clutch or as a triple clutch or as a brake in conjunction with a planetary gear mechanism.

10. Method according to one of Claims 3 to 9, **characterized in that** the active pulsator (21) is operated electromagnetically or piezoelectrically or is embodied as a pulsation pump.

11. Method according to one of Claims 1 to 10, **characterized in that** the rotational axis (A) and the rotational axis (B) extend coaxially, or **in that** the rotational axis (A) and the rotational axis (B) extend in an offset fashion.

**Revendications**

1. Procédé de transfert et d'amortissement d'un couple de rotation moyen (Mm) avec un couple alternant superposé (Mw) dans un agencement de transfert de couple (1) pour une chaîne cinématique d'un véhicule automobile, comprenant une région d'entrée (25) pouvant tourner autour d'un axe de rotation (A) et une région de sortie (35) pouvant tourner autour d'un axe de rotation (B), le couple de rotation moyen (Mm) avec le couple alternant superposé (Mw) étant transmis le long d'une voie de couple (M) depuis la région d'entrée (25) jusqu'à la région de sortie (35), la région d'entrée (25) de l'agencement de transfert de couple (1) tournant à une vitesse de rotation d'entrée (ne) autour de l'axe de rotation (A) et la région de sortie (35) de l'agencement de transfert de couple tournant avec une vitesse de rotation de sortie (na) autour de l'axe de rotation (B), au moins la vitesse de rotation d'entrée (ne) se composant d'une vitesse de rotation moyenne (nem) et d'une proportion alternante superposée (newp), la proportion alternante (new) pouvant être décrite approximativement par une superposition d'oscillations périodiques de vitesses de rotation (newp_i) dont les fréquences (f) sont essentiellement dans un rapport entier (i) à la fréquence d'allumage (Zf), chacune de ces oscillations périodiques (newp_i) présentant un minimum (newp_i_Min) et un maximum (newp_i_Max), un agencement de patinage (30) dans la voie de couple (M) entre la région d'entrée (25) et la région de sortie (35) étant prévu pour transférer le couple de rotation moyen (Mm) avec le couple alternant superposé (Mw) et pour générer un patinage de vitesse de rotation (ns) entre la vitesse de rotation ne et la vitesse de rotation na dans la voie de couple (M),
**caractérisé en ce que**
l'agencement de patinage (30) prévoit, dans la région des maxima (newp_i_Max) d'au moins une proportion d'oscillations périodiques (newp_i) de la proportion alternante (newp), un maximum d'une activation externe (40) du patinage de vitesse de rotation (ns) et, dans la région des minima (newp_i_Min) d'au moins une proportion d'oscillations périodiques (newp_i) de la proportion alternante (newp), un minimum d'une activation externe (45) du patinage de vitesse de rotation (ns).

2. Procédé selon la revendication 1, **caractérisé en ce que** l'activation externe (40 ; 45) de l'agencement de patinage (30) est réalisée par un groupe hydraulique.

3. Procédé selon la revendication 2, **caractérisé en ce que** le groupe hydraulique (50) prévoit au moins une pompe hydraulique (53) et un pulsateur actif (21) .

4. Procédé selon la revendication 3, **caractérisé en ce que** le pulsateur actif (21) est associé localement à la pompe hydraulique (53).

5. Procédé selon la revendication 3, **caractérisé en ce que** le pulsateur actif (21) est associé localement à l'agencement de patinage (30).

6. Procédé selon l'une quelconque des revendications 1 à 5, **caractérisé en ce que** l'activation externe (40 ; 45) est apte à prévoir, au niveau de l'agencement de patinage (30), une plage de modulation de 23 à 50 Hz ou une plage de 33 à 66 Hz ou une plage de 50 à 100 Hz.

7. Procédé selon l'une quelconque des revendications 1 à 6, **caractérisé en ce que** l'agencement de patinage (30) est utilisé en tant qu'élément de démarrage (60).

8. Procédé selon l'une quelconque des revendications 1 à 6, **caractérisé en ce qu'**un élément de démarrage est prévu en plus de l'agencement de patinage (30).

9. Procédé selon l'une quelconque des revendications 7 et 8, **caractérisé en ce que** l'agencement de patinage (30) et/ou l'élément de démarrage est réalisé sous forme d'embrayage à friction ou sous forme d'embrayage à disques ou sous forme d'embrayage hydrodynamique ou sous forme d'embrayage de séparation dans des entraînements hybrides ou sous forme de double embrayage ou sous forme de triple embrayage, ou est réalisé sous forme de frein en association avec une transmission planétaire.

10. Procédé selon l'une quelconque des revendications 3 à 9, **caractérisé en ce que** le pulsateur actif (21) fonctionne par voie électromagnétique ou piézoélectrique ou est réalisé sous forme de pompe à pulsations.

11. Procédé selon l'une quelconque des revendications 1 à 10, **caractérisé en ce que** l'axe de rotation (A) et l'axe de rotation (B) s'étendent coaxialement ou **en ce que** l'axe de rotation (A) et l'axe de rotation (B) s'étendent de manière

décalée.

Fig.1

Fig. 2

# Fig. 3

Umgelenktes Moment HAG Volllast

Umgelenktes Moment in Motorhauptordnung [Nm]

Motordrehzahl [U/min]

Fig.4

# Fig. 5

| Motor | DU-Vorentkopplung | schlupffähige Kupplung | Getriebe | Restlicher Antriebsstrang |
|-------|-------------------|------------------------|----------|---------------------------|

# Fig. 6

**Umgelenktes Moment HAG Volllast**

Umgelenktes Moment in Motorhauptordnung [Nm]

Motordrehzahl [U/min]

# Fig.7

Fig. 8

Fig. 9

Fig. 10

Fig. 11

Fig. 12

Fig. 13

EP 3 478 981 B1

Fig. 14

20

Fig. 15

**Reibwertverlauf**

Reibwert μ [-]

tatsächliche Schlupfdrehzahl [U/min]

# Fig. 16

Fig. 17

Fig. 18

**IN DER BESCHREIBUNG AUFGEFÜHRTE DOKUMENTE**

**In der Beschreibung aufgeführte Patentdokumente**

- DE 102008009135 A1